# EUROPÄISCHE PATENTSCHRIFT

(11) **EP 1 220 766 B1**
(45) Veröffentlichungstag und Bekanntmachung des Hinweises auf die Patenterteilung: **21.02.2007**
(21) Anmeldenummer: 00967583.6
(22) Anmeldetag: 18.09.2000
(51) Int. Cl.: B60R 16/02, H02J 1/00

(54) **MEHRSPANNUNGSBORDNETZ**
MULTI-VOLTAGE WIRING LOOM
RESEAU DE BORD A TENSION MULTIPLE

(30) Priorität: 18.09.1999 DE 19944833
(43) Veröffentlichungstag der Anmeldung: 10.07.2002
(73) Patentinhaber: ROBERT BOSCH GMBH, 70442 Stuttgart (DE)
(72) Erfinder: FREY, Wunibald, 71701 Schwieberdingen (DE); HADELER, Ralf, 71229 Leonberg (DE); HILS, Thomas, 75449 Wurmberg (DE); TOPP, Rainer, 72768 Reutlingen (DE); MOHR, Torsten, 71229 Leonberg (DE); JEHLICKA, Joerg, 71229 Leonberg (DE); KNEIFEL, Marcus, 71701 Schwieberdingen (DE)
(86) Internationale Anmeldenummer: PCT/DE2000/003249
(87) Internationale Veröffentlichungsnummer: WO 2001/021445

(56) Entgegenhaltungen:
- EP-A- 0 632 558
- DE-A- 19 755 050
- DE-A- 19 845 569
- US-A- 5 907 194
- KASSAKIAN J.: 'Herausforderungen der neuen 42 V Architektur und Fortschritte in der internationalen Akzeptanz' VDI-BERICHTE: ELEKTRONIK IM KRAFTFAHRZEUG Nr. 1415, 1998, DOSSELDORF (DE), Seiten 21 - 35

## Beschreibung

### Stand der Technik

Die Erfindung betrifft ein Mehrspannungsbordnetz, insbesonders ein Mehrspannungsbordnetz für ein Kraftfahrzeug nach der Gattung des Hauptanspruchs.

### Stand der Technik

In Bordnetzen mit einer Vielzahl von elektrischen Verbrauchern, beispielsweise in Kraftfahrzeugbordnetzen besteht das Problem, daß eine 12V-Spannung zur Energieversorgung nicht mehr ausreicht. Da einige der Verbraucher mit einer höheren Spannung als 12V versorgt werden sollten, sind Mehrspannungsbordnetze bekannt, die zwei unterschiedliche Spannungsebenen aufweisen. Eine erste Spannungsebene, die gegenüber Masse auf plus 12V liegt und eine zweite Spannungsebene auf plus 36V, wobei diese Spannungen jeweils die Nennspannungen sind. Die Verbindung zwischen den beiden Spannungsebenen wird mit Hilfe eines Gleichspannungswandlers hergestellt.

Derartige gattungsgemäße Mehrspannungsbordnetze in einem Kraftfahrzeug werden in der DE-OS 198 45 569, der DE 197 55 050 A1, der US 5,907,194 und in Kassakian, J., Prof.: "Herausforderungen der neuen 42 V Architektur und Fortschritte in der internationalen Akzeptanz", VDI-Berichte Nr. 1415, Seiten 21 bis 35, 1998 beschrieben. Die elektrische Energie wird in diesen Bordnetzen mit Hilfe eines Drehstromgenerators erzeugt, der vom Fahrzeugmotor angetrieben wird und eine Ausgangsspannung von 42V (Ladespannung) liefert. Mit dieser Ladespannung wird eine 36V (Nennspannung) Batterie geladen. Über einen Gleichspannungswandler wird eine 12V Batterie mit einer Ladespannung von 14V versorgt.

An die beiden Batterien können über geeignete Schalter die elektrischen Verbraucher zugeschaltet werden, wobei die 12V Batterie die herkömmlichen Bordnetzverbraucher, beispielsweise Glühlampen versorgt, während die 36V Batterie zur Versorgung von Hochleistungsverbrauchern, beispielsweise Scheibenheizungen verwendet wird. Bei den bekannten Bordnetzen liegen die negativen Anschlüsse der beiden Batterien jeweils auf dem selben Massepotential.

### Vorteile der Erfindung

Das erfindungsgemäße Bordnetz mit den Merkmalen des Anspruchs 1 hat den Vorteil, daß die Möglichkeiten für das Auftreten eines Kurzschlusses zwischen den beiden Spannungsebenen weitgehend vermieden werden. Falls doch ein Kurzschluß zwischen den beiden Spannungsebenen auftritt, wird er in seinen Auswirkungen gedämpft und möglichst umgehend angezeigt bzw. wieder behoben. Gleichzeitig werden die mit der niedrigereren Spannung versorgten Verbraucher in vorteilhafter Weise vor den Auswirkungen des Kurzschlusses geschützt.

Erzielt werden diese Vorteile indem ein Mehrspannungsbordnetz mit den Merkmalen des Anspruchs 1 so ausgestaltet wird, daß Schaltmittel vorgesehen sind, die im Kurzschlussfall wenigstens einen der niederspannungsseitigen Verbraucher zuschalten, wobei der wenigstens eine niederspannungsseitige Verbraucher so ausgelegt ist, dass er den Strom, der bei einem Kurzschluss zwischen den beiden Spannungsebenen auftritt, führen kann und die bezüglich der niedrigeren Spannungsebene vorhandene Überspannung in Verbindung mit einem Innenwiderstand zumindest einer Batterie dadurch absenkt.

Weitere Vorteile der Erfindung werden durch die in den Unteransprüchen angegebenen Maßnahmen erzielt. Diese Maßnahmen ergeben die Vorteile, daß die Punkte, an denen ein ungeschützter Kurzschluß auftreten kann minimiert werden, dies wird beispielsweise durch Verringerung der Leitungslänge und geeignete Zusammenfassung von Verbrauchern der selben Spannungsebene erzielt. Weiterhin werden Kurzschlüsse in vorteilhafter Weise schnell erkannt und durch Abschalten des 36V- bzw. 42V-Verbrauchers an der Spannungsquelle behoben. Während der Zeit bis zur Abschaltung des treibenden 36V- bzw. 42V-Verbrauchers wird das Niederspannungsnetz durch konstruktive Maßnahmen, beispielsweise durch einen Überspannungsschutz oder durch Ableitung der höheren Spannung über die robusten Verbraucher geschützt. Solche robusten Verbraucher, die auch höhere Spannungen als 12V aushalten, sind beispielsweise elektrische Heizungen oder die 12V- bzw. 14V-Batterie selbst. Durch Verringerung der ungeschützten 36V- bzw. 42V-Leitungen mittels geeigneter Kombination von Spannungswandler und Signal und Leistungsverteiler (SLV), läßt sich die Kurzschlußwahrscheinlichkeit in vorteilhafter Weise weiter verringern; dasselbe gilt auch für einen Aufbau mit räumlicher Nähe von Signal und Leistungsverteiler (SLV) und 36V- bzw. 42V-Batterie.

Eine weitere vorteilhafte Möglichkeit, die Kurzschlußwahrscheinlichkeit zu verringern, besteht darin, die ungeschützten 42V-Leitungen durch Absicherung über Zusätzliche Signal- und Leistungsverteiler (Satelliten-Signal und Leistungsverteiler (Satelliten-SLV)) und Gleichspannungswandlern über ein sogenanntes Master-Signal und Leistungsverteilersystem (Master-SLV) erzielen.

Mit dem erfindungsgemäßen Bordnetz ergibt sich in vorteilhafter Weise die Möglichkeitein Gesamtkonzept für ein Mehrspannungsbordnetz darzustellen, mit einer Batterieabsicherung auch im Crash-Fall und einer Absicherung des unteren (14V-) Teilnetzes für den Fall eines Kurzschlusses zwischen den beiden Teilnetzen. Es werden in vorteilhafter Weise auch im Kurzschlußfall Folgeschäden hinsichtlich der Batterie vermieden. Dabei ist die Sicherstellung einer "gesunden Batterie" durch Klammerung des 14V-Teilnetzes bei gleichzeitiger Funktion als Opferverbraucher zur Sicherstellung des Überstromes im Kurzschlußfall vorteilhaft. Selbstsensierende Leistungsschalter (z.B. Sensfet's) im 42V-Teilnetz zur Kurzschlußerkennung und Abschaltung sind von Vorteil.

Besonders vorteilhaft ist auch der Einsatz einer aktiven Spannungsbegrenzung mit MOS-Endstufe, durch die zusätzlicher Aufwand bei der Verpolung entfallen kann.

### Zeichnung

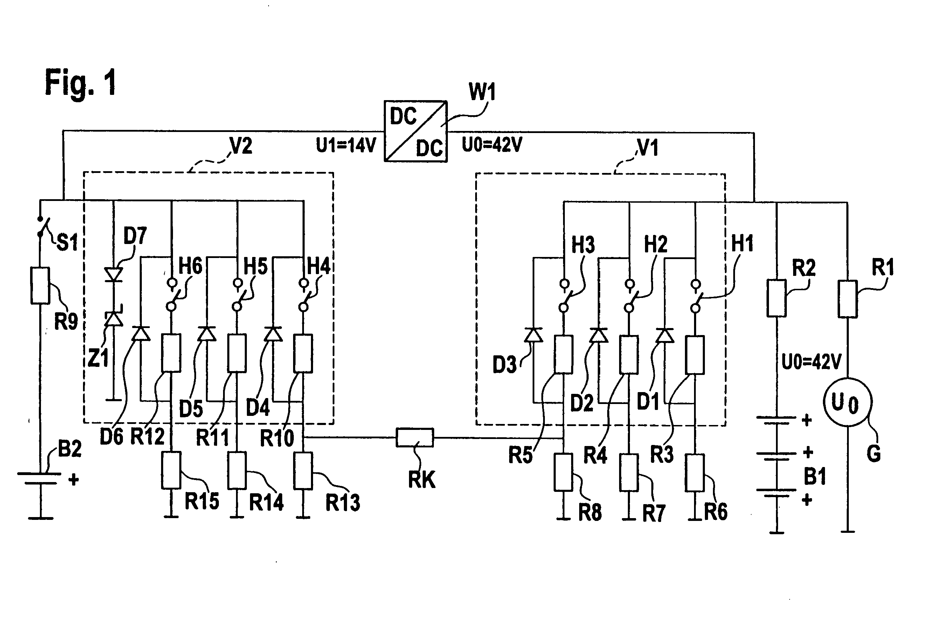

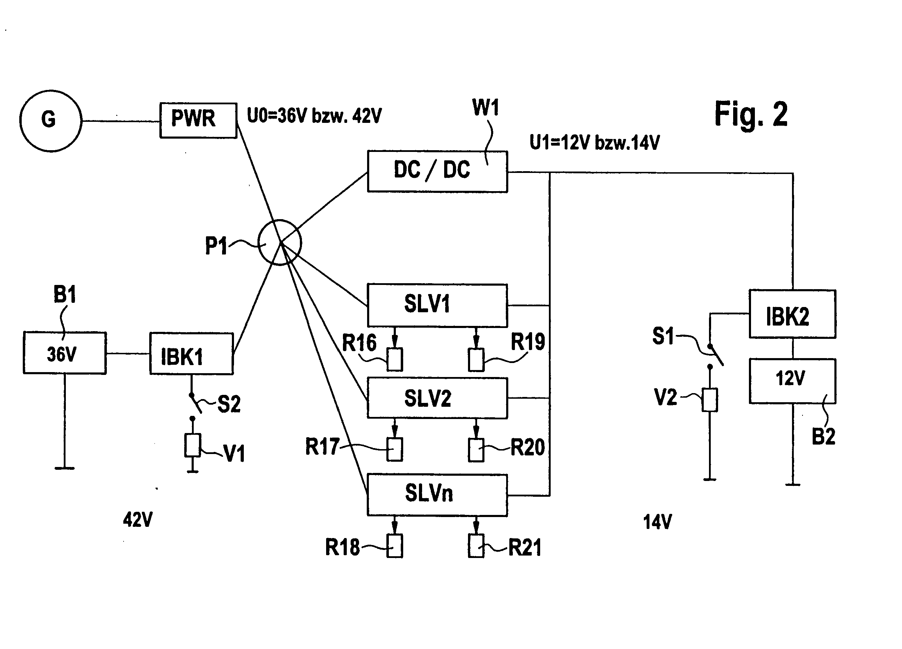

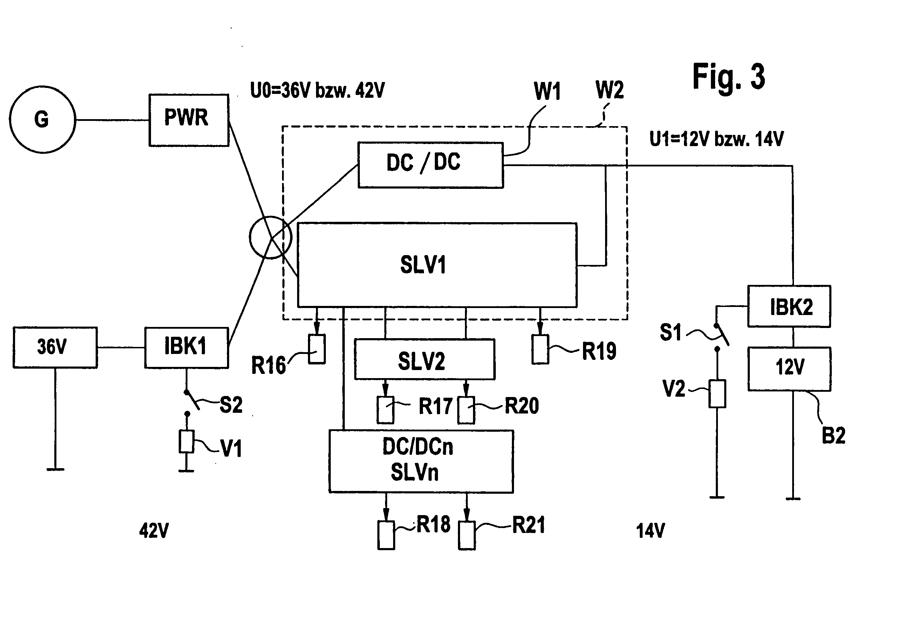

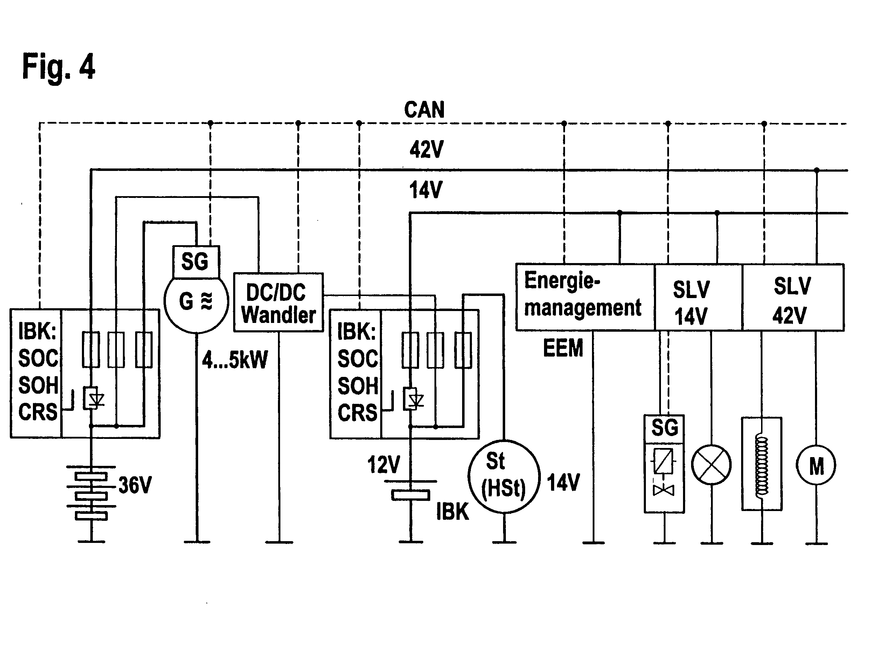

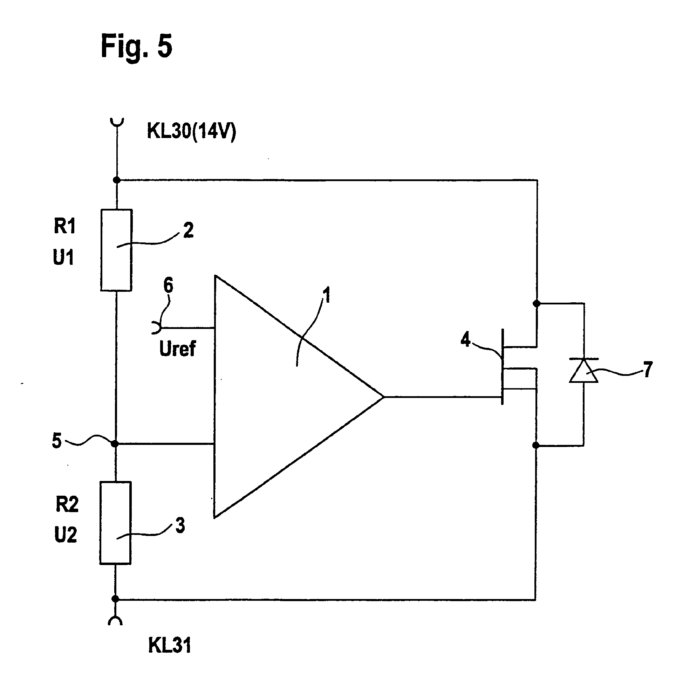

Ausführungsbeispiele der Erfindung sind in der Zeichnung dargestellt und werden in der nachfolgenden Beschreibung näher erläutert. Im einzelnen zeigt Figur 1 beispielhaft ein Zweispannungsbordnetz im Fall eines Kurzschlusses zwischen den beiden Spannungsebenen, Figur 2 eine erste einfache Bordnetz-Architektur und Figur 3 eine erweiterte Bordnetz-Architektur, die gegenüber der in der Figur 2 dargestellten verbessert ist und Figur 4 eine Darstellung eines Gesamtkonzeptes mit Batterie-Absicherung für den Crash-Fall und im Kurzschlußfall. In Figur 5 ist ein Beispiel einer weiteren Schutzschaltung dargestellt.

### Beschreibung

In Figur 1 sind schematisch die für das Verständnis der Erfindung wesentlichen Bestandteile eines Zweispannungsbordnetzes eines Kraftfahrzeuges gemäß dem Stand der Technik dargestellt. Im einzelnen bezeichnet G den Generator, beispielsweise einen Klauenpoldrehstromgenerator, der vom Fahrzeugmotor angetrieben wird. Der Generator G liefert eine Ausgangsspannung U0 von beispielsweise 42V, die direkt zur Ladung der Batterie B1 mit 36V Nennspannung dient. Der Leitungswiderstand zwischen dem Generator G und der Batterie B1 wird durch die Widerstände R1 und R2 symbolisiert. Mit dem Generator G stehen die Verbraucher, die mit der Spannung U0 versorgt werden sollen, über den Signal-Leistung-Verteiler V1 in Verbindung. Im einzelnen sind drei Verbraucher R6, R7 und R8 dargestellt, die beispielsweise über Halbleiterschalter H1, H2 und H3 mit dem Generator G verbindbar sind. Diese Halbleiterschalter H1, H2 und H3 weisen bauartbedingt die Inversdioden D1, D2 und D3 und die Innenwiderstände R3, R4 und R5 auf.

Eine zweite Batterie B2 wird vom Generator G über einen Gleichspannungswandler W1 geladen. Der Gleichspannungswandler (DC/DC-Wandler) W1 wandelt die Spannung U0=42V in eine Spannung U1=14V, die zur Ladung der Batterie B2 mit einer Nennspannung von 12V geeignet ist. Die Zuführung der Spannung U1 vom Spannungswandler W1 zur Batterie B2 erfolgt über den Schalter S1 und die Leitung mit dem Leitungswiderstand R9. Der mit R9 bezeichnete Widerstand umfaßt auch den Innenwiderstand der Batterie B2.

Die Batterie B2 dient zur Versorgung von Verbrauchern, die eine geringere Spannung benötigen, beispielsweise 12V bzw. 14V. Der Anschluß erfolgt über den Signal-Leistungs-Verteiler V2. Diese Verbraucher sind mit R13, R14 und R15 bezeichnet, sie können über die Halbleiterschalter H4, H5 und H6, die jeweils die Inversdioden D4, D5 und D6 aufweisen, zugeschaltet werden. Die Leitungswiderstände zwischen den Verbrauchern R13, R14 und R15 sind mit R10, R11 und R12 bezeichnet.

Zu den Verbrauchern, die über den SLV V2 mit 12V bzw. 14V versorgt werden sollen, gehört noch die Serienschaltung einer Zenerdiode Z1 und einer weiteren Diode D7, die miteinander einen Überspannungsschutz bilden.

Die Auswahl der Verbraucher für die eine oder andere Spannungsebene erfolgt abhängig von den Spannungserfordernissen für ihren optimalen Betrieb. Der Starter kann beispielsweise entweder an die 12V-Batterie oder die 36V-Batterie angeschlossen werden.

Bei Verwendung von Halbleiterschaltern auf der 14V Seite wird der Schalter mit der kurzgeschlossenen 14V-Last über die stets vorhandene Inversdiode des betreffenden Halbleiterschalters leitend und legt damit sämtliche 14V-Verbraucher an 42V, wodurch die Verbraucher, die dafür nicht ausgelegt sind, gefährdet sind. In Figur 1 ist ein solcher Kurzschluß dargestellt. Ein Widerstand RK, der spannungsseitig zwischen den Widerständen R8 und R13 liegt, stellt einen Kurzschluß dar, der erfindungsgemäß entweder vermieden werden soll oder zumindest in seinen Auswirkungen gemildert wird. Wie ein durch den Widerstand RK symbolisierter Kurzschluß verhindert oder in seinen Auswirkungen beschränkt werden kann, wird im folgenden noch näher erläutert.

In Figur 2 ist eine weitere Ausführungsform einer Fahrzeug-Bordnetz-Architektur gemäß dem Stand der Technik dargestellt. Dabei ist der Generator wieder mit G bezeichnet, zusätzlich ist in Figur 2 die Regelung des Generators angedeutet, sie erfolgt mit Hilfe von Pulswechselrichterelementen, die für einen Drehstromgenerator in bekannter Weise als Pulswechselrichterbrücke PWR aufgebaut sind. Die Spannung U0 tritt in diesem Fall am Ausgang der Pulswechselrichterbrücke PWR auf. Die Spannung U0 wird verschiedenen Bauelementen des Bordnetzes nach Figur 2 zugeführt, wobei im gewählten Ausführungsbeispiel der Anschluß dieser Bauelemente jeweils an einen Punkt P1 erfolgt. An diesen Punkt P1 wird die intelligente Batterieklemme IBK1 angeschlossen, über die die Batterie B1 mit der Spannung U0 versorgt wird. Weiterhin können auch Verbraucher V1 über den Schalter S2 direkt an die intelligente Batterieklemme IBK1 angeschlossen und damit mit der Batterie B1 verbunden werden. Vom Punkt P1 aus werden auch der Gleichspannungswandler W1 sowie die Signal-Leistungs-Verteiler SLV1, SLV2 bis SLVn mit der Spannung U0

versorgt, über die ihrerseits weitere Verbraucher, von denen nur die Verbraucher R16, R17 und R18 angegeben sind, versorgt werden können. Die Signal-Leistungs-Verteiler (SLV) sind eingangsseitig auf der 36V bzw.42V und auf der 12V bzw.14V Seite untereinander verbunden, sie liegen also parallel zum Spannungswandler W1. Ausgangsseitig liefern die Signal-Leistungs-Verteiler die Versorgungsspannungen U0 bzw. U1 für die Verbraucher R16, R17, R18, bzw. R19, R20, R21.

Die Niederspannungsseite des Spannungswandlers W1, auf der die Spannung U1 gleich 12 bzw. 14V liegt, führt über die intelligente Batterieklemme IBK2 auf die Batterie B2. Über den Schalter S3 können weiter Verbraucher V2 mit der intelligenten Batterieklemme mit Überspannungsschutz IBK2 und damit direkt mit der Batterie B2 verbunden werden.

Die eigenliche 42V und 14V Spannungsebenen werden durch die entsprechenden Seiten der Signal-Leistungs-Verteiler mit den zugehörigen Verbrauchern, R16, R17 und R18 symbolisch für die 42V Spannungsebene und R19, R20, R21 symbolisch für die Verbraucher der 14V Spannungsebene gebildet.

Das in Figur 2 dargestellte Beispiel für eine Fahrzeug-Bordnetz-Architektur stellt eine Standardausführung dar, die mit der in Figur 3 dargestellten Anordnung verbessert wird. Der Unterschied zwischen dem Ausführungsbeispiel der Erfindung nach Figur 3 und dem Beispiel nach Figur 2 besteht darin, daß der Spannungswandler W1 und der Signal-Leistungs-Verteiler SLV1 zusammengefaßt sind und den Wandler W2 bilden. Der Signal-Leistungs-Verteiler SLV1 des Wandlers W2 steht dann mit weiteren Signal-Leistungs-Verteilern SLV2 bis SLVn in Verbindung und stellt einen Master-SLV dar, der die Satelliten-Signal-Leistungs Verteiler SLV2 bis SLVn absichert. Die Satelliten SLV können eigene DC/DC-Wandler aufweisen, wobei der SLV und der DC/DC-Wandler dann zumindest teilweise zusammengefaßt sind. Die Signal-Leistungs-Verteile umfassen falls erforderlich einen eigenen Mikroprozessor, der die erorderlichen Ansteuerungen selbständig durchführt.

Beim Ausführungsbeispiel nach Figur 3 ist beispielsweise der Spannungswandler W1 mit dem Signal-Leistungs-Verteiler SLV1 zu einem gemeinsamen Bauteil W2 zusammengefaßt. Dem Signal-Leistungs-Verteiler SLVn ist ein eigener Gleichspannungswandler DC/DCn zugeordnet und der Signal-Leistungs-Verteiler SLV2 wird direkt vom Signal-Leistungs-Verteiler SLV1 versorgt bzw. angesteuert. Weitere Anschlußmöglichkeiten an die Signal-Leistungs-Verteiler sind gegeben. Die übrigen Bestandteile des Bordnetzes des Ausführungsbeispiels nach Figur 3 entsprechen dem Beispiel nach Figur 2.

Wie in Figur 1 dargestellt ist, können in einem Zweispannungsbordnetz, beispielsweise in einem Bordnetz mit 14V/42V Spannungsebenen gegenüber Masse zu den bekannten Kurzschlüssen gegenüber Masse weitere Fehler bzw. Kurzschlüsse auftreten, nämlich Kurzschlüsse zwischen 14V und 42V. Sofern wie in Figur 1 dargestellt ist, Halbleiterschalter H1 bis H6 zur Zu- oder Abschaltung von Verbrauchern eingesetzt werden, sind automatisch auch Inversdioden D1 bis D6 vorhanden, die zu berücksichtigen sind. Bei Verwendung von Halbleiterschaltern mit Inversdiode auf der 14V Seite wird der Schalter mit dem kurzgeschlossenen 14V Verbraucher über die zugehörige Inversdiode leitend und verbindet sämtliche 14V Lasten mit 42V. Alle 14V-Verbraucher liegen somit bei einem einzigen Kurzschluß an 42V und sind, da sie üblicherweise darauf nicht ausgelegt sind, gefährdet. Erfindungsgemäß soll nun die Möglichkeit eines 14V/42V Kurzschlusses vermindert werden und bei einem ggf. doch auftretenden Kurzschluß sollen wenigstens die 14V Verbraucher geschützt werden. Mit dem in Figur 2 dargestellten Fahrzeugbordnetz lassen sich durch konstruktive Ausgestaltungen einige Schutzmaßnahmen erzielen, in Figur 3 ist jedoch die vorteilhafteste erfindungsgemäße Ausgestaltung einer Bordnetz-Architektur dargestellt, mit der alle Vorteile der Erfindung realisiert werden können.

Bei einer Anordnung gemäß der in Figur 2 dargestellten Fahrzeug-Bordnetz-Architektur können verschiedene Leitungen von der 36V- bzw. 42V-Batterie B1 zum Generator G, zum Gleichspannungswandler W1 und den Signal- und Leistungsverteiler SLV1 bis SLVn führen. Diese Leitungen sind durch keine Schalter oder Sicherungen außer der intelligenten Batterieklemme IBK1 abgesichert. Ein Kurzschluß einer dieser Leitungen zu einem 14V-Verbraucher R19, R20, R21 oder V2 kann nicht durch Abschaltung auf 42V korrigiert werden, es besteht jedoch die Möglichkeit, die Abschaltung der Batterie über die intelligente Batterieklemme IBK1 vorzunehmen, dadurch wird jedoch das gesamte Bordnetz abgeschaltet. Da üblicherweise die Signal-Leistungs-Verteiler SLV1 bis SLVn auf das gesamte Fahrzeug verteilt sind und beispielsweise im Motorraum, im Cockpit oder im Kofferraum angeordnet sind, entstehen beträchtliche Kabellängen, die einen Kurzschluß relativ wahrscheinlich machen. Auch für die einfache Ausführungsform nach Figur 2 lassen sich jedoch Maßnahmen treffen, die zu einer Verringerung der Wahrscheinlichkeit eines Kurzschlusses führen.

Eine erste Maßnahme zur Verringerung der Wahrscheinlichkeit eines Kurzschlusses auf ungeschützten 42V Leitungen ist die Zusammenfassung oder zumindest Gewährleistung einer räumlichen Nähe eines zentralen Signal- und Leistungsverteilers SLV1 mit dem Gleichspannungswandler W1 oder mit einem zusätzlichen Gleichspannungswandler. Dadurch wird eine neue Steuereinheit gebildet, innerhalb derer die Leitungen und Stecker derart ausgeführt werden, daß die 14V Bereiche und die 42V Bereiche maximal voneinander entfernt sind.

Eine zweite Maßnahme ist die räumliche Nähe von Batterie und der zugehörigen Gleichspannungswandlerkombination. Alternativ dazu kann der Pulswechselrichter PWR des Generators G mit dem Gleichspannungswandler W1 kombiniert werden oder zumindest eine räumliche Nähe zwischen diesen Bauteilen gewährleistet werden.

Eine dritte Maßnahme, die mit dem Ausführungsbeispiel nach Figur 3 ermöglicht wird, besteht darin, die weiteren Signal-Leistungs-Verteiler nicht direkt an die Batterie anzuschließen, sondern als sogenannte Satelliten-Signal-Leistungs-Verteiler durch einen Master-Signal-Leistungs-Verteiler abzusichern.

Zur Versorgung der 14V Seite des Bordnetzes können alternativ zentrale oder dezentrale lokal verteilte Gleichspannungswandler (DC/DC-Wandler) eingesetzt werden. Dezentrale Gleichspannungswandler verringern die Länge von ungeschützten 14V Leitungen und verringern somit die Wahrscheinlichkeit, daß die diese Leitungen mit 42V Leitungen berühren. Falls diese Alternative gewählt wird, kann die Absicherung wiederum über den Master-Signal-Leistungs-Verteiler durchgeführt werden und der Gleichspannungswandler mit einem Satelliten-Signal-Leistungs-Verteiler zu einer eigenen Steuereinrichtung kombiniert werden. Die erwähnten Maßnahmen tragen alle dazu bei, die Wahrscheinlichkeit eines Kurzschlusses zu verringern. Falls jedoch dennoch ein Kurzschluß auftritt, werden erfindungsgemäß zumindest Maßnahmen eingeleitet, die die Auswirkungen des Kurzschlusses abmildern.

Bei einem 14V/42V Kurzschluß wie er in Figur 1 dargestellt ist, liegt zunächst die 42V Versorgungsspannung am kurzgeschlossenen 14V Verbraucher an. Über die zugehörige Inversdiode des Halbleiterschalters im Signal-Leistungs-Verteiler liegt daraufhin die Spannung von 42V an allen 14V Schaltern an, die sich gegen die Überspannung durch Durchschalten schützen. Nach kurzer Zeit liegt daher an allen, auch an den abgeschalteten 14V Verbauchern eine Spannung von 42V an, die zur Zerstörung der Verbraucher führen kann, falls keine Gegenmaßnahmen getroffen werden. Eine Möglichkeit, die Zerstörung zu verhindern, besteht darin, anstelle der Halbleiterschalter mit Inversdiode rückstromfreie Schalter einzusetzen, wobei eine Ortung des Kurzschlusses auf 42V dann schwierig wird.

Eine weitere Alternative besteht darin, bei einem Kurzschluß einen starken 14V Verbaucher ("Opferverbraucher") zuzuschalten, z.B.einen der Widerstände R19, R20, R21 und die sich ergebende Spannung im Netz gezielt abzusenken. Der sich durch den Opferverbraucher einstellende hohe Strom, der auch durch den speisenden 42V Verbraucher fließt, bietet die Möglichkeit, den speisenden Verbraucher aktiv zu erkennen, indem mit Hilfe einer Strommessung der Überstrom erkannt wird. Nach der Erkennung der Verbrauchers kann dieser abgeschaltet werden oder mit Hilfe einer implementierten Sicherungsfunktion kann am 42V Verbraucher eine gezielte Abschaltung durchgeführt werden. Das Abschalten der speisenden 42V Last ist auf alle Fälle die Reaktion, die das Netz auf die effektivste und sparsamste Art und Weise repariert.

Zur Erkennung des Überstroms der speisenden 42V Last bzw. des speisenden 42V Verbrauchers kann im Signal-Leistungs-Verteiler, beispielsweise im Master-SLV in einer unterlagerten Programmschleife in einem sehr kurzen Taktzyklus der Strom durch die 42V sensiert werden, bei erkanntem Überstrom kann dann eine Abschaltung vorgenommen werden. Je kürzer die Zeit zwischen dem Auftreten des Fehlers und der Abschaltung der speisenden Last ist, desto kürzer ist die Zeit, in der Überspannung bei den 14V Verbrauchern und Unterspannung an den 42V Verbrauchern auftritt.

Falls der Kurzschluß an einem 42V Verbraucher aufgetreten ist, der von einem Satelliten-Signal-Leistungs-Verteiler SLV versorgt wird, darf der Master-Signal-Leistungs-Verteiler SLV die Leitung zum Satelliten SLV nicht sofort abtrennen, sondern muß diesem Zeit lassen, den Fehler zu beheben. Sollte dies innerhalb einer festgestellten Zeitspanne nicht geschehen sein, muß der Master SLV den Satelliten SLV dennoch abschalten, da der Kurzschluß dann vermutlich auf der Versorgungsleitung des Satelliten SLV aufgetreten ist.

Da diese Zeit nicht unendlich kurz ist, sollte sichergestellt werden, daß der Opferverbraucher entsprechend ausgelegt ist und durch die Überspannung bzw. den dadurch fließenden Strom nicht zerstört wird. Eine Möglichkeit ist das Einfügen eines Überspannungsschutzelements wie beispielsweise eines aktiven Überspanngsbegrenzers ähnlich einem Load-Dump-Schutz, der die Spannung in einem definierten Bereich hält.

Eine Alternative ist die Nutzung der 12V-Batterie als Opferverbraucher. Die 12V- und 36V-Batterie (Nennspannung) müssen dementsprechend ausgelegt werden, daß beide Batterien für den Zeitraum der zur Erkennung und Abschaltung der speisenden Last notwendig ist, nicht geschädigt werden und sich die Spannung im Netz auf einen Wert einpendelt, der weder die Verbraucher der 42V noch die Verbraucher der 14V Spannungsebene schädigt.

In Figur 4 ist ein weiteres Gesamtkonzept eines Bordnetzes dargestellt. Dieses als 14/42 Volt-Bordnetz (Ladespannung) bzw. 12/36 Volt (Nennspannung) ausgestaltete Fahrzeug-Bordnetz umfaßt ein Vorsicherungskonzept, eine, vorzugsweise im Energiemanagement integrierten Batterie-Zustansüberwachung und eine in den Einzelschaltern des 42 Volt-Teilnetzes integrierte Überstromabschaltung.

Das Gesamtkonzept mit elektrischem Batteriemanagement (EBM) und elektrischem Energiemanagement (EEM) besteht aus einem Generator G, der auch als Starter/Generator ausgestaltet sein kann und umfaßt vorzugsweise bidirektionale Gleichspannungswandler (DC/DC-Wandler), ein Batterie-Vorsicherungskonzept, ein Energiemanagement und Signalleistungsverteiler (SLV) für das 14 Volt- bzw. 42 Volt-Teilnetz. Zum 14 Volt-Teilnetz gehört noch ein Starter St, der benötigt wird, sofern an 42 Volt nur ein Generator liegt, bzw. ein Hilfsstarter HSt, der im Falle eines Starter/Generators an 42 Volt ausreicht. Der Starter St soll für einen Fremdstart und der Hilfsstarter zur Unterstützung des Starter/Generators im Fall eines Tieftemperaturstarts ausgelegt werden.

Das Vorsicherungskonzept besteht pro Batterie aus einer Einheit, die nahe am B+-Anschluß (B+-Bolzen) der Batterie oder in unmittelbarer Nähe davon angeordnet sein sollte. Es beinhaltet Sicherungen zum Generator oder Starter/Generator bzw. zum Starter St, jeweils einen elektronischen Schalter zum Bordnetz und Komponenten zur Parametererfassung des Batteriezustandes (Ladezustand SOC und Alter der Batterie SOH) Die eigentliche Batteriezustandsberechnung erfolgt vorzugsweise im Energiemanagement, neben dessen eigentlicher Aufgabe, der Sicherstellung des Batterieladezustandes in beiden Teilnetzen über Beeinflussung von Antriebsstrang und Verbrauchern. Alle Komponenten korrespondieren über einen Karosseriebus (z.B. CAN-Bus) miteinander. Die Gesamtkoordination ist im Energiemanagement integriert

Mit dem beschriebenen Vorsicherungskonzept können vorteilhafterweise in einer kompakten Einheit die eigentlichen Vorsicherungen für Generator und DC/DC-Wandler bzw. Starter, der Schalter zur Abschaltung des Bordnetzes im Crash-Fall (angesteuert über CAN vom Airbag) und Komponenten zur Erfassung des Batteriezustandes (IB, UB, TB) integriert sein. Aufgrund der gewählten Anordnung werden keine invers geschalteten zusätzlichen Leistungsschalter benötigt, dadurch ist der Spannungsabfall über dem HL-Schalter, vorzugsweise Power-MOSFET geringer.

Ein weiteres wesentliches Merkmal des gesamtsicherungskonzepts ist, in den Schaltern (SLV) des 42 Volt-Teilnetzes enthalten. Diese sind z,B. als Sensfet ausgeführt. Die eigentliche Überstromerfassung ist als HW (Hardware) auszuführen, damit ist gewährleistet, dass eine Abschaltung des Kurzschlußpfades im 42 Volt-Teilnetz im Mikrosekundenbereich möglich ist. Dies ist wichtig, damit die vom Kurzschluß betroffenen 14 Volt-Komponenten sicher geschützt sind.

Die 12/14 Volt Batterie, deren Zustand überwacht wird, is in der Lage, das 14 Volt-Teilnetz bis zur Abschaltung auf der 42 Volt Seite sicher auf ein unschädliches Niveau zu klammern. Ausserdem ist sie Garant dafür, dass unabhängig von der momentanen Lastsituation im Kurzschlußfall ein deutlich erkennbarer Überstrom im Kurzschlußkreis zustande kommt.

In Figur 5 ist eine Schutzschaltung dargestellt, bei der ein Leistungstransistor 4, vorzugsweise ein MOSFET-Schalttransistor mit integrierter Freilaufdiode 7 verwendet wird. Der Leistungstransistor 4 wird dabei von einem Komparator 1 gesteuert, dessen einem Eingang 6 eine Referenzspannung Uref zugeführt wird. Der zweite Eingang 5 des Komparators 1 ist zwischen der Reihenschaltung der Widerstände 2 und 3 angeschlossen, wobei der Widerstand 2 mit der Klemme KL30 in Verbindung steht und der Widerstand 3 mit der Klemme KL 31 verbunden ist. Die Klemme KL30 entspricht dabei der 12 bzw. 14 Volt-Klemme eines üblichen Bordnetzes, während die Klemme KL31 der Masseleitung entspricht.

Die Funktionsweise der Schaltung kann folgendermaßen erläutert werden: Die Spannung an der 14-Volt-Klemme wird über den Spannungsteiler mit den Widerständen 2 und 3 auf die Masseklemme KL31 geleitet. Die zwischen den beiden Widerständen 2 und 3 anliegende Spannung wird gemessen bzw. dem Eingang des Komparators 1 zugeführt und mit der Referenzspannung Uref verglichen. Entsprechend des über die Widerstände 2, 3 fließenden Stromes fällt am Widerstand 3 die Spannung U2 ab. Übersteigt diese Spannung U2, die dem Komparator 1 zugeführt wird, die vorgebbare Referenzspannung Uref, wird der angesteuerte Leistungstransistor 4 leitend und begrenzt daher die Spannung auf den Wert, der durch die Widerstände 2 und 3 definiert wird. Durch Wahl der widerstände 2 und 3 kann somit eine bestimmte Spannung vorgegeben werden. Der Leistungstransistor 4 bildet somit eine aktive Spannungsbegrenzung.

Wird das Bordnetz durch eine negative Spannung gespeist, ist die rückwärts gerichtete Diode (Reversediode) 7 des Leistungstransistors 4 leitend geschaltet. Im Bordnetz stellt sich dann als maximale negative Spannung die Schleusenspannung der Reversediode 7 ein. Dieser Wert ist in seiner Größe vorgebbar. Die Reversediode übernimmt somit eine Schutzfunktion, die gegenüber einer möglichen Kombination mit einer Zenerdiode den Vorteil hat, dass ein engeres Toleranzband für die Spannung eingestellt werden kann. Mit der in der Figur 5 dargestellten Schaltung gelingt es vorteilhaft, sowohl einen Kurzschluß als auch negative Spannungen zu begrenzen.

## Patentansprüche

1. Mehrspannungsbordnetz mit wenigstens zwei Spannungsebenen mit zwei von Masse verschiedenen Spannungen (U0, U1), mit einem Generator (G), der eine der Spannungen (U0) erzeugt, und wenigstens einem Spannungswandler (W1, W2), der aus der ersten Spannung (U0) die zweite Spannung (U1) erzeugt, mit Verbrauchern (R16 bis R21), die über Schaltmittel (SLV1, SLV2, SLVn) mit einer der Spanungen (U0, U1) betreibbar sind, und mit mindestens einer Batterie (B1, B2) zur Versorgung der Verbraucher (R16 bis R21), wobei Mittel zum Kurzschlußschutz vorhanden sind, die die Gefahr des Auftretens eines Kurzschlusses verringern und/oder die Auswirkungen eines Kurzschlusses zwischen den beiden Spannungen (U0, U1) vermindern und gegebenenfalls gefährdete, niederspannungsseitige Verbraucher (R19, R20, R21) im Kurzschlußfall schützen, **dadurch gekennzeichnet, dass** die Schaltmittel (SLV1, SLV2, SLVn) im Kurzschlussfall wenigstens einen der niederspannungsseitigen Verbraucher (R19, R20, R21) zuschalten, wobei der wenigstens eine niederspannungsseitige Verbraucher (R19, R20, R21) so ausgelegt ist, dass er den Strom, der bei einem Kurzschluss zwischen den beiden Spannungsebenen auftritt, führen kann und die bezüglich der niedrigeren Spannungsebene vorhandene Überspannung in Verbindung mit einem Innenwiderstand (R1, R9) der zumindest einen Batterie (B1, B2) **dadurch** absenkt.

2. Mehrspannungsbordnetz nach Anspruch 1, **dadurch gekennzeichnet, dass** es sich um ein Zweispannungsbordnetz in einem Kraftfahrzeug handelt, dass eine erste Batterie (B2) mit 12V Nennspannung (U1) und eine zweite Batterie (B1) mit 36V Nennspannung (U0) vorhanden ist und eine masseferne Anschlußklemme wenigstens einer der Batterien (B1, B2) als intelligente Batterieklemme (IBK1, IBK2) ausgestaltet ist, die vorgebbare Eigenschaften aufweist und insbesonders eine Überspannungsabschaltung umfaßt.

3. Mehrspannungsbordnetz nach Anspruch 1 oder 2, **dadurch gekennzeichnet, dass** dem Spannungswandler (W1) wenigstens ein Signal-Leistungs-Verteiler (SLV1), der wenigstens einen Mikroprozessor umfaßt, zugeordnet ist, der die Verteilung der elektrischen Energie übernimmt und ggf. weitere Signal-Leistungs-Verteiler (SLV2, SLVn) steuert.

4. Mehrspannungsbordnetz nach einem der vorhergehenden Ansprüche, **dadurch gekennzeichnet, dass** die ungeschützten 36V bzw. 42V-Leitungen zusammengefaßt und in räumlicher Nähe eines zentralen Signal-Leistungs-Verteilers (SLV1) insbesonders mit einem Spannungswandler angebracht sind und die Leitungen des 12V- bzw. 14V-Bordnetzes möglichst weit von denen des 36V- bzw. 42V-Bordnetzes eingebaut sind.

5. Mehrspannungsbordnetz nach einem der vorhergehenden Ansprüche, **dadurch gekennzeichnet, dass** dem Generator (G) ein Pulswechselrichter (PWR) zugeordnet ist, der die Ausgangsspannung des Generators (G) gleichrichtet und die gleichgerichtete Spannung (U0) dem Gleichspannungswandler (W1, W2) zuführt.

6. Mehrspannungsbordnetz nach einem der vorhergehenden Ansprüche, **dadurch gekennzeichnet, dass** die Signal-Leistungs-Verteiler (SLV2, SLVn) als Satelliten-Signal-Leistungs-Verteiler ausgebildet sind, die durch ein Master-Signalleistungs-Verteiler (SLV1) gesteuert und/oder abgesichert sind.

7. Mehrspannungsbordnetz nach einem der vorhergehenden Ansprüche, **dadurch gekennzeichnet, dass** wenigsten ein Schaltmittel (SLV1, SLV2, SLVn), über das wenigstens ein zugehöriger Verbraucher (R16 bis R21) an Spannung (U0, U1) legbar ist, Mittel zur Strommessung aufweist, die bei einem zu hohen Strom einen Kurzschluß anzeigen.

8. Mehrspannungsbordnetz nach einem der Ansprüche 6 oder 7, **dadurch gekennzeichnet, dass** der wenigstens eine Verbraucher (R16 bis R21) ein Leistungsschalter, insbesonders ein MOSFET-Leistungstransistor (4) ist.

9. Mehrspannungsbordnetz nach Anspruch 8, **dadurch gekennzeichnet, dass** der Leistungstransistor (4) von einem Komparator (1) steuerbar ist.

10. Mehrspannungsbordnetz nach Anspruch 8 oder 9, **dadurch gekennzeichnet, dass** der Leistungstransistor (4) bei Überschreiten einer vorgebbaren Referenzspannung (Uref) leitend schaltet und den Strom über zwei in Serie geschaltete Widerstände (2, 3) begrenzt.

11. Mehrspannungsbordnetz nach einem der vorhergehenden Ansprüche, **dadurch gekennzeichnet, dass** durch Einsatz entsprechender Mittel zum Durchführen der Managementfunktionen ein Gesamtkonzept für ein elektrisches Batterie- (EBM) und Energiemanagement (EEM) erreicht ist.

## Claims

1. Multi-voltage on-board power system for a vehicle, having at least two voltage levels with two voltages (U0, U1), which are different from earth, with a generator (G) which generates one of the voltages (U0), and at least one voltage transformer (W1, W2) which generates the second voltage (U1) from the first voltage (U0), with loads (R16 to R21) which can be operated with one of the voltages (U0, U1) using switching means (SLV1, SLV2, SLVn), and having at least one battery (B1, B2) for supplying the loads (R16 to R21), means for preventing short circuits being presented, which means reduce the risk of the occurrence of a short circuit and/or avoid the effects of a short circuit between the two voltages (U0, U1), and which in the case of a short circuit protect low-voltage-end loads (R19, R20, R21) which, according to the circumstances, are at risk, **characterized in that** in the event of a short circuit the switching means (SLV1, SLV2, SLVn) connect at least one of the low-voltage-end loads (R19, R20, R21) into the circuit, the at least one low-voltage-end load (R19, R20, R21) being configured in such a way that it can conduct the current which occurs when there is a short circuit between the two voltage levels and thus reduces the overvoltage present with respect to the lower voltage level, in conjunction with an internal resistor (R1, R9) of the at least one battery (B1, B2).

2. Multi-voltage on-board power system for a vehicle according to Claim 1, **characterized in that** it is a two-voltage on-board power system in a motor vehicle, **in that** a first battery (B2) with a 12V rated voltage (U1) and the second battery (B1) with a 36V rated voltage (U0) are present, and a terminal, which is remote from earth, of at least one of the batteries (B1, B2) is configured as an intelligent battery terminal (IBK1, IBK2), which has predefinable properties and comprises in particular an overvoltage deactivation means.

3. Multi-voltage on-board power system for a vehicle according to Claim 1 or 2, **characterized in that** at least one signal power distributor (SLV1), which comprises at least one microprocessor, is assigned to the voltage transformer (W1), said signal power distributor (SLV1) distributing the electrical energy and, if appropriate, controlling further signal power distributors (SLV2, SLVn).

4. Multi-voltage on-board power system for a vehicle according to one of the preceding claims, **characterized in that** the unprotected 36V or 42V lines are combined and are mounted in the spatial proximity of a central signal power distributor (SLV1), in particular with a voltage transformer, and the lines of the 12V or 14V on-board power system are installed as far away as possible from those of the 36V or 42V on-board power system.

5. Multi-voltage on-board power system for a vehicle according to one of the preceding claims, **characterized in that** a pulse-controlled inverter (PWR) is assigned to the generator (G), said pulse-controlled inverter (PWR) rectifying the output voltage of the generator (G) and feeding the rectified voltage (U0) to the direct voltage transformer (W1, W2).

6. Multi-voltage on-board power system for a vehicle according to one of the preceding claims, **characterized in that** the signal power distributors (SLV2, SLVn) are embodied as satellite signal power distributors which are controlled and/or protected by a master signal power distributor (SLV1).

7. Multi-voltage on-board power system for a vehicle according to one of the preceding claims, **characterized in that** at least one switching means (SLV1, SLV2, SLVn) which can be used to connect an associated load (R16 to R21) to a voltage (U0, U1) has means for measuring current which indicate a short circuit when there is an excessively high current.

8. Multi-voltage on-board power system for a vehicle according to one of Claims 6 or 7, **characterized in that** the at least one load (R16 to R21) is a power switch, in particular a MOSFET power transistor (4).

9. Multi-voltage on-board power system for a vehicle according to Claim 8, **characterized in that** the power transistor (4) can be controlled by a comparator (1).

10. Multi-voltage on-board power system for a vehicle according to Claim 8 or 9, **characterized in that** the power transistor (4) switches on when a predefinable reference voltage (Uref) is exceeded, and limits the current across two resistors (2, 3) which are connected in series.

11. Multi-voltage on-board power system for a vehicle according to one of the preceding claims, **characterized in that** by using corresponding means for carrying out the management functions a total concept for electrical battery management (EBM) and electrical energy management (EEM) is obtained.

## Revendications

1. Réseau de bord à tensions multiples avec au moins deux niveaux de tension avec deux tensions (U0, U1) différentes de la masse, comprenant un générateur (G) qui génère l'une des tensions (U0) et au moins un convertisseur de tension (W1, W2) qui génère la deuxième tension (U1) à partir de la première tension (U0), des récepteurs (R16 à R21) fonctionnant avec l'une des tensions (U0, U1) par l'intermédiaire de moyens de commutation (SLV1, SLV2, SLVn), et au moins une batterie (B1, B2) pour l'alimentation des récepteurs (R16 à R21), avec des moyens de protection contre des courts-circuits pour diminuer le risque d'une apparition d'un court-circuit et/ou réduire les effets d'un court-circuit entre les deux tensions (U0, U1) et le cas échéant protéger des récepteurs (R19, R20, R21) côté basse tension en danger en cas de court-circuit,
**caractérisé en ce qu'**
en cas de court-circuit les moyens de commutation (SLV1, SLV2, SLVn) activent au moins l'un des récepteurs (R19, R20, R21) côté basse tension, au moins un des récepteurs (R19, R20, R21) côté basse tension étant conçu pour pouvoir conduire le courant généré lors d'un court-circuit entre les deux niveaux de tension, et la surtension apparente par rapport au niveau de tension inférieur et en liaison avec une résistance intérieure (R1, R9) d'au moins une batterie (B1, B2) est ainsi abaissée.

2. Réseau de bord à tensions multiples selon la revendication 1,
**caractérisé en ce qu'**
il s'agit d'un réseau de bord à deux tensions dans un véhicule automobile, avec une première batterie (B2) avec une tension nominale de 12 V (U1) et une deuxième batterie (B1) avec une tension nominale de 36 V (U0), et une borne de raccordement éloignée de la masse d'au moins une des batteries (B1, B2) est une borne de batterie intelligente (IBK1, IBK2) qui présente des caractéristiques pouvant être prédéfinies et comprend en particulier une coupure de surtension.

3. Réseau de bord à tensions multiples selon la revendication 1 ou 2,
**caractérisé en ce qu'**
on associe au convertisseur de tension (W1) au moins un répartiteur de puissance de signal (SLV1) comprenant au moins un microprocesseur qui assure la distribution de l'énergie électrique et commande le cas échéant d'autres répartiteurs de puissance de signal (SLV2, SLVn).

4. Réseau de bord à tensions multiples selon l'une quelconque des revendications précédentes,
**caractérisé en ce que**
les lignes 36 V ou 42 V non protégées sont installées de façon regroupée et à proximité d'un répartiteur de puissance de signal central (SLV1), en particulier avec un convertisseur de tension, et les lignes du réseau de bord 12 V ou 14 V sont montées le plus loin possible de celles du réseau de bord 36 V ou 42 V.

5. Réseau de bord à tensions multiples selon l'une quelconque des revendications précédentes,
**caractérisé en ce qu'**
on associe au générateur (G) un onduleur à impulsions (PWR) qui redresse la tension de sortie du générateur (G) et transmet la tension redressée (U0) au convertisseur de tension continue (W1, W2).

6. Réseau de bord à tensions multiples selon l'une quelconque des revendications précédentes,
**caractérisé en ce que**
les répartiteurs de puissance de signal (SLV2, SLVn) sont des répartiteurs de puissance de signal à satellite commandés et/ou protégés par un répartiteur de puissance de signal maître (SLV1).

7. Réseau de bord à tensions multiples selon l'une quelconque des revendications précédentes,
**caractérisé en ce qu'**
au moins un moyen de commutation (SLV1, SLV2, SLVn), qui permet d'alimenter en tension (U0, U1) au moins un récepteur (R16 à R21) associé, présente des moyens de mesure de courant qui, lorsque le courant est trop élevé, indiquent un court-circuit.

8. Réseau de bord à tensions multiples selon l'une quelconque des revendications 6 ou 7,
**caractérisé en ce qu'**
au moins un récepteur (R16 à R21) est un interrupteur de puissance, en particulier un transistor de puissance MOSFET (4).

9. Réseau de bord à tensions multiples selon la revendication 8,
**caractérisé en ce que**
le transistor de puissance (4) peut être commandé par un comparateur (1).

10. Réseau de bord à tensions multiples selon la revendication 8 ou 9,
**caractérisé en ce qu'**
en cas de dépassement d'une tension de référence (Uref) prédéterminable, le transistor de puissance (4) est commuté en conduction et limite le courant par deux résistances (2, 3) montées en série.

11. Réseau de bord à tensions multiples selon l'une quelconque des revendications précédentes,
**caractérisé en ce que**
grâce à l'utilisation de moyens appropriés pour réaliser les fonctions de gestion, on obtient un concept global pour une gestion électrique de batterie (EBM) et d'énergie (EEM).
